# EUROPÄISCHE PATENTSCHRIFT

(11) **EP 3 051 938 B1**
(45) Veröffentlichungstag und Bekanntmachung des Hinweises auf die Patenterteilung: **15.11.2017**
(21) Anmeldenummer: 14789509.8
(22) Anmeldetag: 26.09.2014
(51) Int. Cl.: A01C 7/10, A01C 7/12, G01F 11/24, A01C 7/08

(54) **LANDWIRTSCHAFTLICHE VERTEILMASCHINE MIT EINEM DOSIERSYSTEM**
AGRICULTURAL DISTRIBUTION MACHINE WITH A METERING SYSTEM
MACHINE DE DISTRIBUTION AGRICOLE AVEC UN SYSTÈME DE DOSAGE

(30) Priorität: 02.10.2013 DE 102013110991
(43) Veröffentlichungstag der Anmeldung: 10.08.2016
(73) Patentinhaber: Lemken GmbH & Co. KG, 46519 Alpen (DE)
(72) Erfinder: GEBBEKEN, Martin, 46519 Alpen (DE); PAESSENS, Christian, 47661 Issum (DE); WERRIES, Dieter, 46519 Alpen (DE); LUKAS, Thomas, 48683 Ahaus-Wüllen (DE); BERENDSEN, Mark, 7044 AJ Lengel (NL); GERAATS, Marcel, 41334 Nettetal (DE); GOTZEN, Christian, 41751 Viersen (DE)
(74) Vertreter: Schulte & Schulte
(86) Internationale Anmeldenummer: PCT/DE2014/100344
(87) Internationale Veröffentlichungsnummer: WO 2015/048943

(56) Entgegenhaltungen:
- WO-A1-98/12512
- DE-A1- 3 425 895
- DE-A1- 3 544 014
- DE-C- 807 722
- US-A- 270 198

## Beschreibung

Die Erfindung betrifft eine landwirtschaftliche Verteilmaschine gemäß dem Oberbegriff des Patentanspruches 1.

Ein solches Dosiersystem für eine landwirtschaftliche Verteilmaschine ist beispielsweise in der deutschen Patentschrift DE 1 946 213 B2 oder in der europäischen Patentanmeldung EP 358 878 A2 beschrieben. Das Dosiersystem besteht aus einem Gehäuse und einem liegenden Zellenrad. Das zu dosierende Material läuft von oben radial in die Zellenkammern ein und wird im unteren Bereich des Zellenrades in ein pneumatisches Fördersystem abgegeben. Das durch Schwerkraft von oben nach rutschende Material wird durch die Rotation des Zellenrades gegen die Gehäusewandung bis zur Abgabeöffnung weiter verdichtet. Hierdurch entsteht ein höheres Antriebsmoment des Zellenrades, welches sich bei Verwendung von spitz zulaufenden Bodenklappen noch weiter erhöht. Zudem leidet die Dosiergenauigkeit unter der unterschiedlichen Verdichtung des Materials. Auch die EP 1 530 891 beschreibt eine Vorrichtung mit einem radial befüllten Zellrad, bei dem das Zellenkammervolumen durch seitliches Verschieben des Zellenrades geändert wird. Zur Veränderung des Zellenkammervolumens kann das Zellenrad um einen zylindrischen, glatten Bereich erweitert werden, wobei das Zellenrad dann seitlich in der Dosiereinheit verschoben werden kann. Dies wird beispielsweise in der Patentschrift DD 74 138 A1 vorgestellt. Die deutsche Offenlegungsschrift DE 10 2006 056 256 behandelt eine solche Dosiereinrichtung. In der deutschen Offenlegungsschrift DE 19 541 397 A1 wird ein vertikal oder schräg rotierender Dosierzylinder vorgestellt, welcher mit axial verlaufenden, unterschiedlich großen Fördernuten ausgebildet ist und sich in einem Granulatvorrat bewegt, wobei das Granulat radial in die Fördernuten einläuft. Dabei bewegt sich eine Fördernut mit dem Granulat an einer axial verlaufenden Abdichtlippe vorbei, welche den Dosierzylinder hemmt und den Antriebsenergiebedarf steigert. Auch hier erfolgt durch den radialen Zulauf von Material eine Vorverdichtung mit den oben beschriebenen Folgen für Dosiergenauigkeit und Antriebsenergie. Über dem Dosierzylinder ist eine axial verschiebbare Abdeckung angeordnet, welche die Füllhöhe der Nuten nach oben begrenzt. Bei Durchfahrt von Geländekuppierungen, wie sie in der Praxis regelmäßig auftreten, ergeben sich unterschiedliche Materialschüttwinkel, welche die Füllhöhe der Nuten beeinflussen und somit zu Ungenauigkeiten der Dosierung beitragen. Insbesondere bei kleinen Fördermengen tritt hier zudem Brückenbildung bei dem Nachlauf von Material aus dem Vorratsbehälter auf. Die deutsche Offenlegungsschrift DE 10 2005 052 741 A1 zeigt eine Zellraddosierung für einen Schleuderstreuer mit Einlauftrichter, die im Einlauftrichter angeordnet ist und zumindest ein Zellenrad aufweist, das axial in Flussrichtung des Einlauftrichters durchströmt wird und von einem regelbaren Motor mit unterschiedlichen Drehzahlen antreibbar ist. Dabei kann das Zellradvolumen sandwichartig durch Stapeln mehrerer Zellräder verändert werden. Dies geht jedoch nur aufwendig und nicht werkzeuglos von statten. Gegenstand der DE-A1-35 44 014 ist eine Vorrichtung zum dosierten Auftragen von Schüttgut mit einem Zellenrad in einer senkrechten Anordnung aber ohne Zellvolumeneinstellung und ohne landwirtschaftliche Anwendung. Aus der WO 98/12512 sind landwirtschaftliche Verteilmaschinen gemäß dem Oberbegriff des Anspruchs 1 und Zellenräder bekannt, bei denen seitlich eingeschobene Füllkörper das Zellenkammervolumen reduzieren, die aber in horizontaler Anordnung eingesetzt werden. Aufgabe der Erfindung ist es, die obigen Nachteile abzustellen, ein betriebssicheres Dosiersystem bereitzustellen, welches einen möglichst gleichmäßigen Materialzulauf und Materialablauf gewährleistet, einen geringen Antriebsdrehmomentbedarf aufweist und einen sehr großen Verstellbereich für den zu dosierenden Materialstrom ermöglicht.

Diese Aufgabe wird durch die Merkmale des kennzeichnenden Teiles des Patentanspruchs 1 gelöst.

Durch die annähernd aufrechte Anordnung des Dosiersystems und des Zellenrades wird ein kontinuierlicher und brückenbildungsfreier Nachlauf des auszubringenden Materials in die Zellenkammern des Zellenrades erreicht. Durch eine Abstandsverstellung der unteren Begrenzungselemente zur Oberkante der stegartigen Elemente des Zellenrades kann das Fördervolumen der einzelnen Zellenkammern auf einfache Weise verstellt werden. Durch die rotierende Bewegung des Zellenrades verlässt ein definiertes Materialvolumen den Bereich der Einlauföffnung und erreicht die Auslauföffnung, wo es durch Schwer- und/oder durch Fliehkraft die Zellenkammer verlässt und in das Transportsystem weitergeleitet wird.

In einer verbesserten Erfindungsform ist die Ummantelung derart ausgebildet, dass das Füllen des Zellenrades oder der Zellenkammern mit Material in vorwiegend axialer Richtung oder parallel zur Achse des Zellenrades erfolgt. Durch den annähernd vertikalen Zulauf von Material in die Zellenkammern, welcher sich aus dieser Formgebung der Ummantelung ergibt, erfolgt eine sichere und vollständige Füllung der Zellenkammern auch in unebenem Gelände oder bei hohen Zellenraddrehzahlen.

In einer besonderen Form der Erfindung sind die den Zellkammern zugewandten Flächen der Begrenzungselemente von der Achse des Zellenrades zur Ummantelung verlaufend nach unten abgeschrägt oder abfallend ausgebildet. Durch diese Formgebung der Begrenzungselemente wird der restlose und vollständige Materialablauf aus der Zellenkammer in die Auslauföffnung verbessert.

Ein weiterer Vorschlag sieht vor, dass die stegartigen Elemente des Zellenrades im oberen Bereich mit einer annähernd gleich oder parallel verlaufenden Querschnittskontur wie die unteren Begrenzungselemente ausgebildet sind. Durch diese Formgebung erreicht man durch die höhenverstellbaren Begrenzungselemente eine Verstellbarkeit des Materialvolumenstromes von maximaler Förderung bis annähernder Null-Förderung.

In einer anderen Erfindungsform sind die stegartigen Elemente des Zellenrades zumindest teilweise aus einem elastischen Material ausgebildet. Durch Verwendung eines elastischen Materials kann einer Zerstörung des Zellenrades bei Eintritt von Fremdkörpern in das Dosiersystem entgegengewirkt werden.

In einer weiteren Form der Erfindung ist die Einlauföffnung mit einer oder mehreren Abstreifkanten oder Abstreifern ausgebildet, welche mit den stegartigen Elementen des Zellenrades den Zulauf von Material begrenzen. Die Abstreifkanten oder Abstreifer definieren die Füllhöhe von Material in der Zellenkammer und tragen zu einem konstanten Materialvolumenstrom bei.

Die Wirksamkeit der Erfindung kann dahin gehend verbessert werden, dass eine oder mehrere Abstreifkanten oder Abstreifer federnd oder aus einem elastischen Material ausgebildet sind. Hierdurch kann dem vorzeitigen Verschleiß des Zellenrades, der Abstreifkanten oder der Abstreifer entgegengewirkt werden, welche insbesondere bei der Dosierung von abrasivem Material wie beispielsweise zu Granulat gebrochenem Dünger auftritt.

In einer besonderen Erfindungsform sind die Begrenzungselemente an ihren oberen, äußeren Berandungen mit Förderstegen oder partiellen Ausnehmungen versehen. Durch diese Formgebung der Begrenzungselemente können diese in ihrer oberen Stellung in Verbindung mit dem Zellenrad die Funktion eines Feinsärades zur Dosierung von geringen Mengen an Feinsämereien oder Mikrogranulat übernehmen.

Es ist außerdem als vorteilhaft anzusehen, wenn die Begrenzungselemente in axialer Richtung zum Zellenrad manuell oder motorisch verschiebbar ausgebildet sind. Dies ermöglicht eine abgestufte oder stufenlose Verstellung des Fördervolumens. Die Verwendung von motorischen Stellelementen ermöglicht zudem eine Fernbetätigung oder den Anschluss an eine Steuer- und Regeleinheit.

In einer kompakten Form der Erfindung ist ein Teil des Zellenrades als Hohlkörper geformt, welcher einen Antriebsmotor aufnehmend ausgebildet ist. Hierdurch wird wertvoller Bauraum der landwirtschaftlichen Verteilmaschine zur Anordnung weiterer Aggregate eingespart.

In einer noch günstigeren Form der Erfindung ist der Antriebsmotor als Trommelmotor mit einer feststehenden Innenachse und einem beweglichen Außengehäuse ausgeführt. Beispielsweise die Verwendung eines handelsüblichen elektrischen Außenläufermotors mit innenliegendem Stator vereinfacht den Aufbau und reduziert die erforderliche Teilezahl.

Als zweckmäßig erweist es sich auch, wenn der Antrieb des Zellenrades in seiner Drehrichtung reversierbar ausgebildet. Beispielsweise durch Verwendung unterschiedlicher Abstreifer in der Einlauföffnung können verschiedene Dosier-Charakteristika des Dosiersystems, welche sich beispielsweise bei Saatgut oder Dünger als zu dosierendes Material ergeben, eingestellt werden oder es kann einer Brückenbildung bei schlechtem Nachlauf von Material aus dem Vorratsbehälter entgegengewirkt werden.

In einer anderen Erfindungsform ist die Achse des Zellenrades mit einem Gewinde und einer Gewindemuffe versehen, welche die Begrenzungselemente im axialen Abstand zur Oberkante der stegartigen Elemente verstellend ausgebildet sind. Durch Verwendung einer Gewindemuffe oder einer Gewindemutter, welche sich selbst hemmend gegen ein Gewinde am unteren Ende der Achse des Zellenrades abstützen, wird eine einfache und stufenlose Möglichkeit der Höhenverstellung geschaffen.

In einer praktischen Erfindungsform sind im Bereich der Gewindemuffe ein oder mehrere Arretierungselemente angeordnet, mit denen die Gewindemuffe in ihrer Drehung zumindest zeitweise festgesetzt werden kann. Durch die Verwendung beispielsweise eines Steckstiftes oder eines Vorreibers kann die Gewindemuffe oder die Gewindemutter arretiert werden. Durch Verdrehen oder Betätigung des Zellenradantriebes in verschiedenen Richtungen können die Begrenzungselemente dadurch in einfacher Weise auf und ab bewegt werden. Auch kann das Arretierungselement durch einen Magneten oder andere Stellmittel fernbetätigt werden.

In einer weiteren Form der Erfindung ist die Berandungskontur der Auslauföffnung derart ausgebildet, dass ein annähernd kontinuierlicher Materialabfluss bei der Drehung des Zellenrades erfolgt. Durch Wahl einer geeigneten Auslaufkontur in der Auslauföffnung der Ummantelung wird eine verbesserte Abgabe von Material in das pneumatische Fördersystem der landwirtschaftlichen Verteilmaschine erreicht. Abgeschrägte, abgerundete oder parabelförmige Konturen haben sich als besonders vorteilhaft erwiesen.

Denkbar ist es auch, dass der Antrieb des Zellenrades sich in den Bereich des Vorratsbehälters oder des Einlauftrichters fortsetzend zum Betrieb einer Rühr- oder Lockerungseinrichtung ausgebildet ist. Durch diese Anordnung wird keine weitere Antriebsvorrichtung für ein Rührwerk benötigt. Beispielsweise können Rührfinger an einem Wellenfortsatz der Antriebswelle oberhalb des Dosiersystems befestigt werden. Insbesondere wenn oberhalb des Dosiersystems Gitter zum Schutz vor Fremdkörpern oder angebackenen Klumpen von Saatgut oder Dünger angeordnet sind, kann ein Rührwerk oder eine Lockerungs- oder Zerkleinerungseinrichtung mögliche Verstopfungen im Materialnachlauf verhindern.

In einer automatisierten Form der Erfindung ist dem Dosiersystem eine Steuer- und Regeleinheit zugeordnet, welche mit einem Programm und hinterlegten Parametern die Antriebsdrehzahl des Zellenrades oder die Zustellung der unteren Begrenzungselemente einstellend oder regelnd ausgebildet ist. Die Steuer- und Regeleinheit kann ein Dosiercomputer sein, welcher beispielsweise anhand der Fahrgeschwindigkeit oder örtlicher Gegebenheiten die Ausbringmenge der landwirtschaftlichen Verteilmaschine regelt, indem er die Drehzahl des Zellenrades verändert oder das Volumen der einzelnen Zellenkammern durch Zustellung bzw. Abstandsveränderung der Begrenzungselemente variiert. Die erforderliche Ausbringmenge von Material kann teilflächenspezifisch in einem Speicher hinterlegt oder lokal durch weitere Sensorik ermittelt werden. Die Steuer- und Regeleinheit kann mit einer Anzeige- und Bedieneinheit verbunden sein, welche eine Überwachung der Funktion oder der Einstellparameter des Dosiersystems oder deren Manipulation durch den Bediener ermöglicht. Denkbar ist auch eine Anordnung von mehreren Dosiersystemen innerhalb einer landwirtschaftlichen Verteilmaschine, denen ein gemeinsamer oder separater Vorratsbehälter und ein gemeinsames oder mehrere separate Förder- und Verteilsysteme zugeordnet sind. Dabei kann eine Steuer- und Regeleinheit in den einzelnen Dosiersystemen unterschiedliche Volumenströme, wie zuvor beschriebenen, einstellen, wie dies beispielsweise bei Anlage von Fahrgassen oder Teilbreiten Schaltung der Verteilmaschine erforderlich ist.

Die Erfindung zeichnet sich insbesondere dadurch aus, dass durch die axiale Verstellbarkeit der Begrenzungselemente ein Dosiersystem mit einem Zellenrad geschaffen wird, welches höhenverstellbare Bodenelemente aufweist. Neben der Wahl unterschiedlicher Drehzahlen für den Antrieb des Zellenrades ist eine weitere Möglichkeit zur Einstellung des Fördervolumens des Zellenrades und somit des Volumenstromes des zu fördernden Materials geschaffen. Im Vergleich zu liegend angeordneten Zellenrädern ändert sich das Drehmoment für den Antrieb des Zellenrades bei unterschiedlich eingestelltem Fördervolumen kaum. Durch den vorwiegend axialen Zulauf von Material im Vergleich zum radialen Zulauf bei liegenden Zellenrädern ergibt sich ein wesentlich kürzerer und annähernd konstanter Materialscherbereich beim Verlassen der gefüllten Zellenkammer aus der Einlauföffnung. Dies reduziert den Antriebsenergiebedarf erheblich. Eine Materialverdichtung innerhalb der Zellenkammern, wie sie bei liegenden Zellenrädern, insbesondere bei radial zulaufenden Bodenklappen zu beobachten ist, tritt hier ebenfalls nicht auf und reduziert den Antriebsenergiebedarf für das Zellenrad zusätzlich. Somit kann der Antrieb des Dosiersystems kompakt, kostengünstig und energiesparend ausgeführt werden. Ein separates Feinsärad, bei dem der restliche Zellenradbereich mit Kupplungselementen außer Betrieb gesetzt werden muss, ist ebenfalls nicht mehr erforderlich und kann eingespart werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Fig. 1: einen schematischen Aufbruch einer landwirtschaftlichen Verteilmaschine,
- Fig. 2: einen vertikalen Schnitt durch den Aufbau des Dosiersystems,
- Fig. 3: einen vertikalen Schnitt durch den Aufbau des Dosiersystems in perspektivischer Darstellung und
- Fig. 4: eine perspektivische Ansicht in den Einlaufbereich des Dosiersystems.

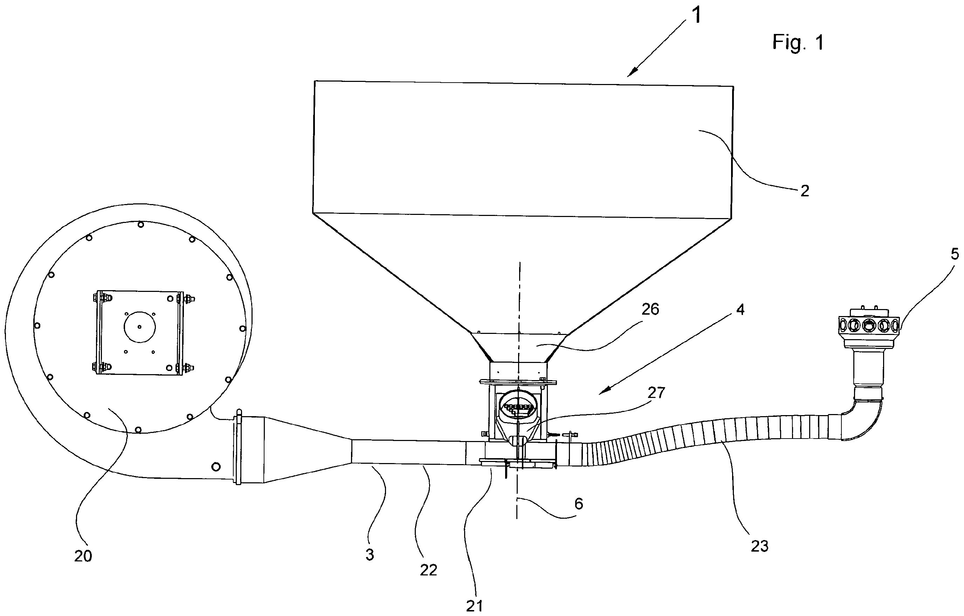

Die landwirtschaftliche Verteilmaschine 1, welche in Figur 1 prinzipiell dargestellt ist, besteht aus einem Vorratsbehälter 2, an dem sich eine oder mehrere Dosiersysteme 4 am unteren Ende anschließen. Durch die trichterförmige oder konische Formgebung des Vorratsbehälters 2 im unteren Bereich fließt das schüttfähige Material restlos über den Einlauftrichter 26 in das Dosiersystem 4. Am Auslauf der Dosiereinrichtung 4 schließt sich ein pneumatisches Transportsystem 3 an. Das Transportsystem 3 wird über ein Gebläse 20 und die Leitung 22 mit einem Luftstrom versorgt. Der Luftstrom verläuft durch eine Injektorschleuse 21, welcher aus dem Dosiersystem 4 Material über das Leitelement 27 zugeführt wird. Von dort gelangt das Material mit dem Luftstrom über die Förderleitung 23 in die Verteileinrichtung 5. Die Verteileinrichtung 5 teilt den Materialstrom gleichmäßig auf und leitet die Teilströme beispielsweise in nicht weiter dargestellte Säschare oder Verteildüsen.

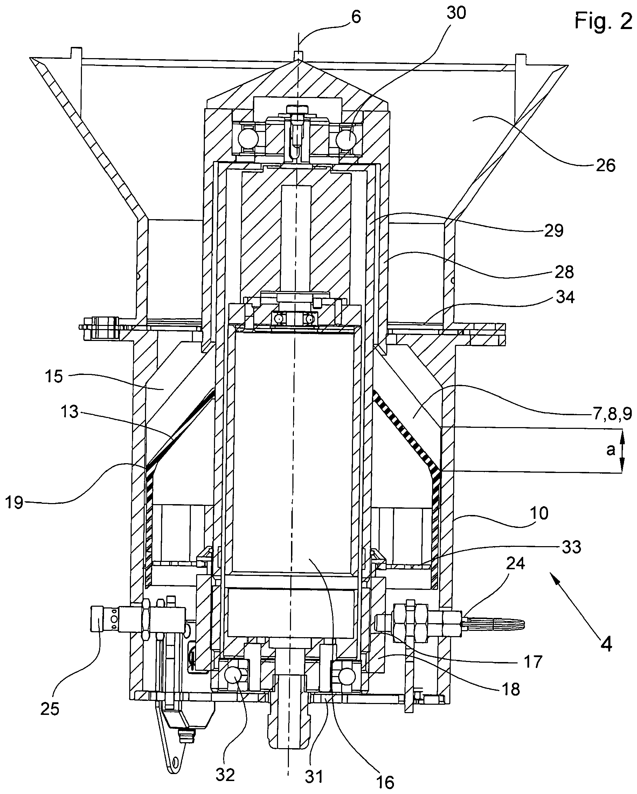

Figur 2 zeigt einen Querschnitt durch das Dosiersystem 4, wie es in gleicher Ansicht in Figur 1 zu sehen ist. Von oben läuft schüttfähiges Material in den Einlauftrichter 26. In dem Einlauftrichter 26 ist ein oben verschlossenes Lagerrohr 28 verbaut, welches die Lagerung 30 für das um die Achse 6 drehbare Zellenrad 7 aufnimmt. An den Einlauftrichter 26 schließt sich die Ummantelung 10 in Form eines Mantelrohres in Flanschbauweise an. In die Flanschverbindung ist ein beweglicher Drehschieber 34 in Form eines Blechsegmentes eingelegt. Hiermit kann der Zufluss von Material begrenzt oder unterbunden werden, um beispielsweise Wartungs- oder Einstellarbeiten am Dosiersystem 4 vorzunehmen. Das Zellenrad 7 besteht aus einem Innenohr 29, welches die Rotationsachse 6 und die radialen Innenwände der Zellenkammern 9 bildet. Von dem Innenrohr 29 erstrecken sich acht stegartige Elemente 8 in gleichmäßiger Aufteilung nach außen und dichten in einem engen Spalt gegen die feststehende Ummantelung 10 ab. Durch eine andere Anzahl von stegartigen Elementen 8 oder deren Formgebung können verschiedene Volumen der Zellenkammern 9 erreicht werden. Oberhalb der stegartigen Elemente 8 sind rechts und links der Achse 6 zwei der Abstreifer 15 an der Ummantelung befestigt. Die um die Achse 6 rotierenden, stegartigen Elemente 8 berühren die Abstreifer 15 oder bilden mit diesen einen Dichtspalt. Über das Innenrohr 29 ist von unten das konische Begrenzungselement 13 aufgeschoben. Das Begrenzungselement 13 ist einteilig ausgeführt und im Bereich der stegartigen Elemente 8 geschlitzt und bildet mit diesen jeweils Dichtspalte. Auch eine mehrteilige Ausführung der Begrenzungselemente 13 beispielsweise mit Schubkeilen ist denkbar. Das axial verschiebbare Begrenzungselement 13 bildet die untere Begrenzung der Zellenkammer 9 und definiert deren Volumeninhalt. Dabei kann der Abstand a von 0 mm (annähernd Null-Förderung) bis zur maximalen Länge der stegartigen Elemente 8 verstellt werden, solange die Dichtheit der Zellenkammern 9 gewährleistet bleibt. In das Innenrohr 29, welches einen Hohlkörper des Zellenrades 7 bildet, ist ein Antriebsmotor 16 in Form eines Elektromotors eingeschoben und mit einer weiteren Lagerung 32 im Innenrohr 29 gelagert. Die Lagerungen 30, 32 sind als wartungsfreie Kugellager ausgeführt. Auch andere Lagerformen wie beispielsweise Gleitlager sind möglich. Der Antriebsmotor 16 treibt im oberen Bereich über einem Teller mit Passfeder die Nabe des Innenohres 29 und somit das Zellenrad 7 an. Das Gehäuse des Antriebsmotors 16 ist über ein oder mehrere Stützbleche 31 mit der Ummantelung 10 fest verbunden. Im unteren Bereich des Innenohres 29 ist ein Gewinde geformt, auf das eine Gewindemuffe 18 aufgeschraubt ist. Das Begrenzungselement 13 greift ist mittels einem oder mehrerer Stegbleche 33 in eine umlaufende Nut der Gewindemuffe 18 ein. Durch Drehen der Gewindemuffe 18 auf dem Gewinde 17 in die eine oder andere Richtung kann somit die Position (a) des Begrenzungselementes 13 verstellt werden. Ist das Gewinde 17 selbsthemmend ausgeführt, erübrigt sich eine weitere Sicherungen gegen unbeabsichtigte Verstellung. Setzt man mit einem zur Ummantelung 10 hin befestigten Arretierungselement 24 die Gewindemuffe 18 zeitweise gegen Verdrehung fest, kann durch Betätigung des Antriebsmotors 16 das Innenrohr 29 und somit das Gewinde 17 in die eine oder andere Richtung verdreht werden und verschiebt somit die Gewindemuffe 18 und ebenfalls das Begrenzungselement 13 in die gewünschte Richtung. Durch eine Fernbetätigung des Arretierungselementes 24 kann eine Verstellung der Dosiermenge von außerhalb oder sogar im laufenden Betrieb des Dosiersystems 4 erfolgen. Ebenso kann die Fernbetätigung des Arretierungselementes 24 und die Steuerung des Antriebsmotors durch eine Steuer- und Regeleinheit erfolgen, um die Regelung der Materialausbringmenge weiter zu automatisieren. Gegenüberliegend zum Arretierungselement 24 ist ein Sensor 25 in der Ummantelung 10 angeordnet. Hiermit kann die Bewegung des Zellenrades 7 oder seiner Stellelemente überwacht werden. Die Signale werden einer Steuer- und Regeleinheit zugeführt.

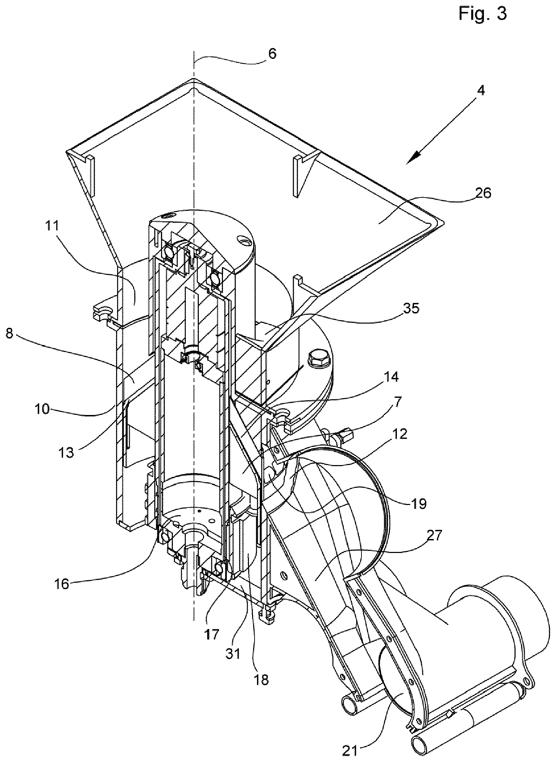

Die Schnittdarstellung des Dosiersystems 4 in Figur 3 ist im Vergleich zu Figur 2 um die Achse 6 um 90° gedreht dargestellt. Die Bezugszeichen und der Ausbau sind bereits weitestgehend in Figur 2 beschrieben. Im Einlauftrichter 26 ist hier ein abgeschrägtes Formelement 35 zur Hälfte dargestellt, welches den Materialzulauf von oben in das Zellenrad 7 im Bereich der Auslauföffnung 12 verhindert. Der nicht durch das Formelement 35 abgedeckte Bereich auf der gegenüberliegenden Seite der Achse 6 bzw. des Innenohres 29 bildet die Einlauföffnung 11 für den Zulauf von Material in das Zellenrad 7 bzw. in diesem Bereich offenen Zellenkammern 9. Die obere, umlaufende Schräge des Formelementes 35 ermöglicht den restlosen Materialablauf in die Einlauföffnung 11. Durch Einfüllen von Material in den Vorratsbehälter 2 bzw. den Einlauftrichter 26 werden die Zellenkammern 9, welche sich in der Einlauföffnung befinden, mit Material bis an das untere Begrenzungselement 13 gefüllt. Der Antriebsmotor 16 versetzt das Zellenrad 7 in eine kontinuierliche Rotation um die Achse 6 und bewegt die gefüllten Zellenkammern 9 an denen hier nicht sichtbaren Abstreifern 15 vorbei in den Bereich der Auslauföffnung 12. Die bereits zuvor beschrieben Abstreifer 15, begrenzen den Füllgrad der Zellenkammern 9 mit Material. Passiert nun ein stegartiges Element 8 des Zellenrades 7 die Berandungskontur der Auslauföffnung 12, fließt das Material durch Schwerkraft und/oder Fliehkraft durch das hier zur Hälfte dargestellte Leitelement 27 in die Injektorschleuse 21, wo es vom Luftstrom des pneumatischen Transportsystems 3 erfasst und, wie zuvor beschrieben, weiter gefördert wird. Wird das untere Begrenzungselement 13 bis in die oberste Stellung gefahren, sind die Zellenkammern 9 des Zellenrades 7 bis auf die Ausnehmungen 19 geschlossen. Nur die Ausnehmungen 19 sind noch als kleiner unterteilte Förderzellen wirksam und ermöglichen feinste Dosierungen von Feinsämereien oder Mikrogranulat.

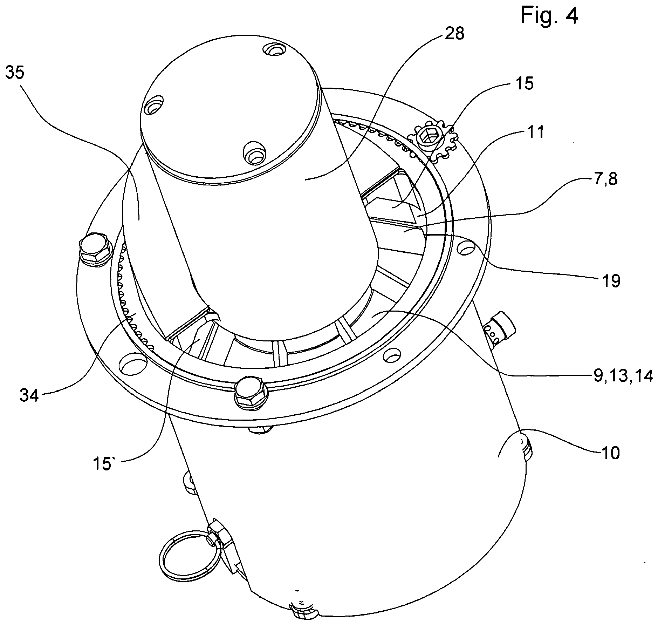

Figur 4 zeigt eine perspektivische Ansicht auf das mit Ummantelung 10, Zellenrad 7 und Lagerrohr 28 reduzierte Dosiersystem mit Blick auf die Einlauföffnung 11. Das Formelement 35 deckt den Bereich der nicht sichtbaren Auslauföffnung in der Ummantelung 10 gegenüber der Einlauföffnung 11 ab. Durch die umlaufende Schräge des Formelementes 35 rutscht das darauf befindliche Material durch Schwerkraft in die Einlauföffnung 11. Die Einlauföffnung 11 kann durch den Drehschieber 34, welcher hier vollständig geöffnet dargestellt ist, verschlossen werden. Die andere, geschlossene Hälfte des Drehschiebers wird durch das Formelement 35 verdeckt und kann durch Rotation des Drehschiebers über die Einlauföffnung 11 bewegt werden. Rechts und links des Lagerrohres 28 sind die Abstreifer 15, 15' zu sehen, welche die Füllhöhe mit Material der Zellenkammern 9 begrenzen. Die Abstreifer 15,15' können austauschbar an der Struktur der Ummantelung 10 oder des Formelementes 35 befestigt werden. Ebenfalls ist die Flucht der Fläche 14 des Begrenzungselementes 13 zur Oberkante des stegartigen Elementes 8 zu erkennen, welche wiederum zur Unterkante der Abstreifer 15, 15' korrespondiert oder fluchtet. Verdeckt durch den Schieber 34 sind die Ausnehmungen 19 im oberen Randbereich des oder der Begrenzungselemente 13 in der Nähe der Ummantelung 10 angeordnet. Der Einlaufbereich 11 erstreckt sich hierauf ungefähr vier sichtbare Zellenkammern 9, welche mit vier weiteren, nicht sichtbaren Zellenkammern das Zellenrad 7 mittels der stegartigen Elemente 8 gleichmäßig aufteilen. Andere Teilungen oder Größen der Einlauföffnung sind ebenfalls denkbar.

## Patentansprüche

1. Landwirtschaftliche Verteilmaschine (1) zum Ausbringen von körnigem oder granuliertem Material aus zumindest einem Vorratsbehälter (2) mit einem Dosiersystem (4) zur dosierten Abgabe in ein pneumatisches Transportsystem (3) und zumindest einer mit dem pneumatischen Transportsystem (3) verbundenen Verteileinrichtung (5), wobei dem Dosiersystem (4) zumindest ein angetriebenes, um eine Achse (6) rotierendes Zellenrad (7) zugeordnet ist, von dessen Achse (6) sich mehrere stegartige Elemente (8) nach außen auf den Umfang des Zellenrades (7) erstrecken und das Zellenrad (7) aufteilende Zellenkammern (9) bilden, wobei die jeweiligen Zellenkammern (9) im seitlichen Bereich durch eine an den Umfang des Zellenrades (7) heranreichende Ummantelung (10) begrenzt werden, wobei über den Zellenkammern (9) im oberen Bereich des Dosiersystems (4) eine Einlauföffnung (11) zum Zufluss von Material in die Zellenkammern (9) gebildet ist, welche sich in ihrem Querschnitt über mindestens eine Teilung des Zellenrades (7) oder eine Zellenkammer (9) erstreckt, wobei die Ummantelung (10) des Zellenrades (7) seitlich und annähernd gegenüberliegend der Einlauföffnung (11) des Vorratsbehälters (2) abgewandt eine Auslauföffnung (12) aufweist, welche sich im Querschnitt am Umfang der Ummantelung (10) und zumindest über eine Teilung des Zellenrades (7) oder eine Zellenkammer (9) erstreckt, wobei die Auslauföffnung (12) für den Materialabfluss zumindest mittelbar mit dem pneumatischen Transportsystem (3) verbunden ist, wobei die Einlauföffnung (11) und die Auslauföffnung (12) derart ausgebildet sind, dass zumindest eine Teilung des Zellenrades (7) oder eine Zellenkammer (9) die Einlauföffnung (11) und die Auslauföffnung (12) voneinander trennt,
**dadurch gekennzeichnet,**
**dass** die Achse (6) des Zellenrades (7) annähernd aufrecht angeordnet ist und dass die Volumen der Zellenkammern (9) im unteren Bereich des Zellenrades (7) durch ein oder mehrere, in axialer Richtung zum Zellenrad (7) verschiebbare Begrenzungselemente (13) bestimmt oder begrenzt werden, deren axialer Abstand (a) zur Oberkante der stegartigen Elemente (8) einstellbar ausgebildet ist.

2. Landwirtschaftliche Verteilmaschine nach Anspruch 1,
**dadurch gekennzeichnet,**
**dass** die Ummantelung (10) derart ausgebildet ist, dass das Füllen des Zellenrades (7) oder der Zellenkammern (9) mit Material in vorwiegend axialer Richtung oder parallel zur Achse (6) des Zellenrades (7) erfolgt.

3. Landwirtschaftliche Verteilmaschine nach Anspruch 1 oder 2,
**dadurch gekennzeichnet,**
**dass** die den Zellkammern (9) zugewandte Fläche (14) der Begrenzungselemente (13) von der Achse (6) des Zellenrades (7) zur Ummantelung (10) verlaufend nach unten abgeschrägt oder abfallend ausgebildet ist.

4. Landwirtschaftliche Verteilmaschine nach vorstehenden Ansprüchen,
**dadurch gekennzeichnet,**
**dass** die stegartigen Elemente (8) des Zellenrades (7) im oberen Bereich mit einer annähernd gleich oder parallel verlaufenden Querschnittskontur wie die unteren Begrenzungselemente (13) ausgebildet sind.

5. Landwirtschaftliche Verteilmaschine nach vorstehenden Ansprüchen,
**dadurch gekennzeichnet,**
**dass** die stegartigen Elemente (8) des Zellenrades (7) vorzugsweise zumindest teilweise aus einem elastischen Material ausgebildet sind.

6. Landwirtschaftliche Verteilmaschine nach vorstehenden Ansprüchen,
**dadurch gekennzeichnet,**
**dass** die Einlauföffnung (11) mit einer oder mehreren Abstreifkanten oder Abstreifern (15) ausgebildet ist, welche mit den stegartigen Elementen (8) des Zellenrades (7) den Zulauf von Material begrenzend angeordnet sind.

7. Landwirtschaftliche Verteilmaschine nach Anspruch 6,
**dadurch gekennzeichnet,**
**dass** eine oder mehrere Abstreifkanten oder Abstreifer (15) federnd oder aus einem elastischen Material ausgebildet sind.

8. Landwirtschaftliche Verteilmaschine nach vorstehenden Ansprüchen,
**dadurch gekennzeichnet,**
**dass** die Begrenzungselemente (13) an ihren oberen, äußeren bzw. inneren Berandungen mit Förderstegen oder partiellen Ausnehmungen (19) versehen sind.

9. Landwirtschaftliche Verteilmaschine nach vorstehenden Ansprüchen,
**dadurch gekennzeichnet,**
**dass** die Begrenzungselemente (13) in axialer Richtung zum Zellenrad (7) manuell oder motorisch verschiebbar ausgebildet sind.

10. Landwirtschaftliche Verteilmaschine nach vorstehenden Ansprüchen,
**dadurch gekennzeichnet,**
**dass** ein Teil des Zellenrades (7) als Hohlkörper geformt ist, welches einen Antriebsmotor (16) aufnehmend ausgebildet ist

11. Landwirtschaftliche Verteilmaschine nach Anspruch 10,
**dadurch gekennzeichnet,**
**dass** der Antriebsmotor (16) als Trommelmotor mit einer feststehenden Innenachse und einem beweglichen Außengehäuse ausgeführt ist.

12. Landwirtschaftliche Verteilmaschine nach vorstehenden Ansprüchen,
**dadurch gekennzeichnet,**
**dass** der Antrieb des Zellenrades (7) in seiner Drehrichtung reversierbar ausgebildet ist.

13. Landwirtschaftliche Verteilmaschine nach vorstehenden Ansprüchen,
**dadurch gekennzeichnet,**
**dass** die Achse (6) des Zellenrades (7) mit einem Gewinde (17) und einer Gewindemuffe (18) die Begrenzungselemente (13) im axialen Abstand (a) zur Oberkante der stegartigen Elemente (8) verstellend ausgebildet ist.

14. Landwirtschaftliche Verteilmaschine nach Anspruch 13,
**dadurch gekennzeichnet,**
**dass** im Bereich der Gewindemuffe (18) ein oder mehrere Arretierungselemente (24) angeordnet sind, mit denen die Gewindemuffe (18) in ihrer Drehung zumindest zeitweise festgesetzt wird.

15. Landwirtschaftliche Verteilmaschine nach vorstehenden Ansprüchen,
**dadurch gekennzeichnet,**
**dass** der Antrieb des Zellenrades (7) sich in den Bereich des Vorratsbehälters (2) oder des Einlauftrichters (26) fortsetzend zum Betrieb einer Rühr- oder Lockerungseinrichtung ausgebildet ist.

16. Landwirtschaftliche Verteilmaschine nach vorstehenden Ansprüchen,
**dadurch gekennzeichnet,**
**dass** dem Dosiersystem (4) eine Steuer- und Regeleinheit zugeordnet ist, welche mit einem Programm und hinterlegten Parametern die Antriebsdrehzahl des Zellenrades oder die Zustellung der unteren Begrenzungselemente in Abhängigkeit einer ermittelten Fahrgeschwindigkeit einstellend oder regelnd ausgebildet ist.

## Claims

1. Agricultural distributor (1), for dispensing granular or granulated material from at least one storage container (2) with a metering system (4) for metered delivery to a pneumatic transport system (3) and of at least one distributing device (5) connected to the pneumatic transport system (3), whereby the metering system (4) is allocated at least one driven cell wheel (7) rotating around an axle (6) from which axle (6) several rib-type elements (8) extend to the outside around the circumference of the cell wheel (7) and form the cell chambers (9) that divide the cell wheel (7), whereby the respective cell chambers (9) are limited at the side by a casing (10) reaching to the perimeter of the cell wheel (7), whereby an inlet opening (11) for the inflow of material into the cell chambers (9), which extends in its profile over at least one partition of the cell wheel (7) or a cell chamber (9), is formed above the cell chambers (9) in the upper section of the metering system (4), whereby the casing (10) of the cell wheel (7) at the side and approximately opposite to the inlet opening (11) of the storage containers (2) has a discharge opening (12) that extends in its profile at the perimeter of the casing (10) and at least over one partition of the cell wheel (7) or a cell chamber (9), whereby the discharge opening (12) for the material discharge is connected at least indirectly with the pneumatic transport system (3), whereby the inlet opening (11) and the discharge opening (12) are formed in such a way that at least one partition of the cell wheel (7) or a cell chamber (9) separate the inlet opening (11) and the discharge opening (12) from one another,
**characterised in that**
the axle (6) of the cell wheel (7) is arranged practically vertical and the volumes of the cell chambers (9) in the lower section of the cell wheel (7) are defined or limited by one or more partition elements (13) movable in an axial direction to the cell wheel (7), whose axial distance (α) to the upper edge of the rib-type elements (8) is designed to be adjustable.

2. Agricultural distributor in accordance with claim 1
**characterised in that**
the casing (10) is formed in such a way that the cell wheel (7) or the cell chambers (9) are filled with material mainly in an axial direction or parallel to the axle (6) of the cell wheel (7).

3. Agricultural distributor in accordance with claim 1 or 2,
**characterised in that**
the surface (14) of the partition elements (13) facing the cell chambers (9) is designed sloping or slanting running downwards from the axle (6) of the cell wheel (7) to the casing (10).

4. Agricultural distributor in accordance with the above claims
**characterised in that**
the rib-type elements (8) of the cell wheel (7) are formed in the upper section with an approximately identical or parallel contour to the lower partition elements (13).

5. Agricultural distributor in accordance with the above claims
**characterised in that**
the rib-type elements (8) of the cell wheel (7) are formed preferably at least partly from an elastic material.

6. Agricultural distributor in accordance with the above claims
**characterised in that**
the inlet opening (11) is formed with one or more stripper edges or strippers (15) that are located to limit the inflow of material together with the rib-type elements (8) of the cell wheel (7).

7. Agricultural distributor in accordance with claim 6
**characterised in that**
one or more stripper edges or strippers (15) are designed to be flexible or are made from an elastic material.

8. Agricultural distributor in accordance with the above claims
**characterised in that**
the partition elements (13) are provided with conveying ribs or partial recesses (19) at the upper, outer or inner edges.

9. Agricultural distributor in accordance with the above claims
**characterised in that**
the partition elements (13) are designed to be movable to the cell wheel (7) in an axial direction manually or by a motor.

10. Agricultural distributor in accordance with the above claims
**characterised in that**
a part of the cell wheel (7) is formed as a cavity that is designed to hold a drive motor (16).

11. Agricultural distributor in accordance with claim 10
**characterised in that**
the drive motor (16) is implemented as a drum motor with a rigid internal axle and a movable external housing.

12. Agricultural distributor in accordance with the above claims
**characterised in that**
the drive of the cell wheel (7) is designed to be reversible in its direction of rotation.

13. Agricultural distributor in accordance with the above claims
**characterised in that**
the axle (6) of the cell wheel (7) is formed to adjust the partition elements (13) with a thread (17) and a threaded socket (18) in the axial distance (α) from the upper edge of the rib-type elements (8).

14. Agricultural distributor in accordance with claim 13
**characterised in that**
one or more locking elements (24) are arranged in the area of the threaded socket (18) with which the threaded socket (18) is locked in its rotation at least temporarily.

15. Agricultural distributor in accordance with the above claims
**characterised in that**
the drive of the cell wheel (7) is designed to continue into the area of the storage container (2) or of the feed hopper (26) to operate a stirring or loosening device.

16. Agricultural distributor in accordance with the above claims
**characterised in that**
a control appliance is allocated to the metering system (4) that is designed to set or control the drive speed of the cell wheel or the setting of the lower partition elements with a program and stored parameters in dependence on a measured drive speed.

## Revendications

1. Épandeur agricole (1) pour l'épandage d'un matériau granulaire ou en granulés à partir d'un réservoir (2) avec un système de dosage (4) pour la distribution dosée vers un système de transport pneumatique (3) et au moins un dispositif d'épandage (5) relié avec le système de transport pneumatique (3), au moins une roue cellulaire (7) entraînée tournant autour d'un axe (6) correspondant au système de dosage (4), à partir de l'axe (6) de laquelle s'étendent plusieurs éléments en forme de nervures (8) vers l'extérieur sur la périphérique de la roue cellulaire (7) et formant des chambres cellulaires (9) divisant la roue cellulaire (7), les différentes chambres cellulaires (9) étant limitées, dans la zone latérale, par une enveloppe (10) s'étendant jusqu'à proximité de la périphérie de la roue cellulaire (7), moyennant quoi, au-dessus des chambres cellulaires (9), dans la partie supérieure du système de dosage (4), est réalisée une ouverture d'entrée (11) pour l'introduction d'un matériau dans les chambres cellulaires (9), qui s'étend, avec sa section transversale, sur au moins une division de la roue cellulaire (7) ou une chambre cellulaire (9), l'enveloppe (10) de la roue cellulaire (7) comprenant, latéralement et approximativement en face de l'ouverture d'entrée (11) du réservoir (2), une ouverture de sortie (12), qui s'étend, avec sa section transversale, sur la périphérie de l'enveloppe (10) et au moins sur une division de la roue cellulaire (7) ou une chambre cellulaire (9), l'ouverture de sortie (12) étant reliée, pour l'évacuation du matériau au moins indirectement avec le système de transport pneumatique (3), l'ouverture d'entrée (11) et l'ouverture de sortie (12) étant conçue de façon à ce qu'au moins une division de la roue cellulaire (7) ou une chambre cellulaire (9) sépare l'ouverture d'entrée (11) et l'ouverture de sortie (12),
**caractérisé en ce que**
l'axe (6) de la roue cellulaire (7) est disposé approximativement verticalement et **en ce que** les volumes des chambres cellulaires (9) sont définis ou délimités, dans la zone inférieure de la roue cellulaire (7), par un ou plusieurs éléments de limitation (13) mobile dans la direction axiale par rapport à la roue cellulaire (7), dont la distance axiale (α) par rapport à l'arête supérieure des éléments en forme de nervures (8) est conçue de façon à être réglable.

2. Épandeur agricole selon la revendication 1,
**caractérisé en ce que**
l'enveloppe (10) est conçue de façon à ce que le remplissage de la roue cellulaire (7) ou des chambres cellulaires (9) avec du matériau a lieu majoritairement dans la direction axiale ou parallèle à l'axe (6) de la roue cellulaire (7).

3. Épandeur agricole selon la revendication 1 ou 2,
**caractérisé en ce que**
la face (14) des éléments de limitation (13) orientée vers les chambres cellulaires (9) est conçue de façon à s'étendre de manière chanfreinée ou inclinée vers le bas de l'axe (6) de la roue cellulaire (7) vers l'enveloppe (10).

4. Épandeur agricole selon les revendications précédentes,
**caractérisé en ce que**
les éléments en forme de nervure (8) de la roue cellulaire (7) sont conçus, dans la zone supérieure, avec un contour de section transversale s'étendant de manière approximativement identique ou parallèle aux éléments de limitation inférieurs (13).

5. Épandeur agricole selon les revendications précédentes,
**caractérisé en ce que**
les éléments en forme de nervure (8) de la roue cellulaire (7) sont constitués de préférence d'au moins un matériau élastique.

6. Épandeur agricole selon les revendications précédentes,
**caractérisé en ce que**
l'ouverture d'entrée (11) est réalisée avec une ou plusieurs arêtes de raclage (15) qui sont disposées avec les éléments en forme de nervure (8) de la roue cellulaire (7) de façon à limiter l'entrée du matériau.

7. Épandeur agricole selon la revendication 6,
**caractérisé en ce que**
une ou plusieurs arêtes de raclage ou racleurs (15) sont conçus de manière élastique ou sont constitués d'un matériau élastique.

8. Épandeur agricole selon les revendications précédentes,
**caractérisé en ce que**
les éléments de limitation (13) sont munis, au niveau de leurs bords supérieurs, externes ou internes, de nervures de convoyage ou d'évidements partiels (19).

9. Épandeur agricole selon les revendications précédentes,
**caractérisé en ce que**
les éléments de limitation (13) sont conçus de manière mobile manuellement ou motorisé dans la direction axiale par rapport à la roue cellulaire (7).

10. Épandeur agricole selon les revendications précédentes,
**caractérisé en ce que**
une partie de la roue cellulaire (7) est formée comme un corps creux, qui est conçu de façon à loger un moteur d'entraînement (16).

11. Épandeur agricole selon la revendication 10,
**caractérisé en ce que**
le moteur d'entraînement (16) est conçu comme un moteur à tambour avec un axe interne stationnaire et un carter externe mobile.

12. Épandeur agricole selon les revendications précédentes,
**caractérisé en ce que**
l'entraînement de la roue cellulaire (7) est conçu de manière réversible au niveau de son sens de rotation.

13. Épandeur agricole selon les revendications précédentes,
**caractérisé en ce que**
l'axe (6) de la roue cellulaire (7) est conçu avec un filetage (17) et un manchon fileté (18) afin de régler les éléments de limitation (13) en ce qui concerne la distance axiale (α) par rapport à l'arête supérieure des éléments en forme de nervures (8).

14. Épandeur agricole selon la revendication 13,
**caractérisé en ce que**
au niveau du manchon filetée (18), se trouvent un ou plusieurs éléments de blocage (24) avec lesquels la rotation du manchon fileté (18) est arrêtée au moins temporairement.

15. Épandeur agricole selon les revendications précédentes,
**caractérisé en ce que**
l'entraînement de la roue cellulaire (7) est conçu de façon à se prolonger au niveau du réservoir (2) ou de l'entonnoir d'entrée (26) pour le fonctionnement d'un dispositif d'agitation ou de blocage.

16. Épandeur agricole selon les revendications précédentes,
**caractérisé en ce que**
au système de dosage (4) correspond une unité de commande et de régulation, qui est conçue avec un programme et des paramètres enregistrés afin de régler ou de réguler la vitesse de rotation d'entraînement de la roue cellulaire ou le positionnement des éléments de limitation inférieurs en fonction d'une vitesse de déplacement déterminée.
